# EUROPEAN PATENT SPECIFICATION

(11) **EP 2 118 235 B1**
(45) Date of publication and mention of the grant of the patent: **06.04.2011**
(21) Application number: 08709917.2
(22) Date of filing: 30.01.2008
(51) Int. Cl.: C09K 11/77

(54) **RED EMITTING OXYNITRIDE LUMINESCENT MATERIALS**
ROTLICHT EMITTIERENDE LUMINESZIERENDE OXYNITRID-MATERIALIEN
MATIÈRES À BASE D'OXYNITRURE ÉMETTANT DE LA LUMIÈRE ROUGE

(30) Priority: 06.02.2007 EP 07101812
(43) Date of publication of application: 18.11.2009
(73) Proprietor: Philips Intellectual Property & Standards GmbH, 20099 Hamburg (DE); Koninklijke Philips Electronics N.V., 5621 BA Eindhoven (NL)
(72) Inventor: SCHMIDT, Peter J., NL-5656 AE Eindhoven (NL); STADLER, Florian, NL-5656 AE Eindhoven (NL); SCHNICK, Wolfgang, NL-5656 AE Eindhoven (NL)
(74) Representative: Bekkers, Joost J.J
(86) International application number: PCT/IB2008/050323
(87) International publication number: WO 2008/096291

(56) References cited:
- WO-A-2006/087660
- US-A1- 2003 094 893
- US-A1- 2006 049 414

## Description

### FIELD OF THE INVENTION

The present invention is directed to novel luminescent materials for light emitting devices, especially to the field of novel luminescent materials for LEDs.

### BACKGROUND OF THE INVENTION

Phosphors comprising silicates, phosphates (for example, apatite) and aluminates as host materials, with transition metals or rare earth metals added as activating materials to the host materials, are widely known. As UVA to blue emitting LEDs, in particular, have become practical in recent years, the development of white light sources utilizing such UVA to blue emitting LEDs in combination with such phosphor materials is being energetically pursued.

Especially white emitting luminescent materials have been in the focus of interest and several materials have been proposed, e.g. US6522065 B1. The claimed phosphor is a vanadate garnet material of composition Ca₂NaMg₂V₃O₁₂:Eu that shows yellow emission from the vanadate host lattice group and red line emission of the Eu(III) dopant.

US2003/0094893 discloses M'M"Si₆N₁₁:D and M"₁₆Si₁₅O₆N_{32:}Ce phosphors for use in LEDs.

However, there is still the continuing need for luminescent materials, especially white luminescent materials which are usable within a wide range of applications and especially allow the fabrication of phosphor warm white pcLEDs with optimized luminous efficiency and color rendering.

### SUMMARY OF THE INVENTION

It is an object of the present invention to provide a material which is usable within a wide range of applications and especially allows the fabrication of phosphor warm white pcLEDs with optimized luminous efficiency and color rendering

This object is solved by a material according to claim 1 of the present invention. Accordingly, a material M^{I}₄₋ₓM^{II}ₓSi₆N₁₀₊ₓ0₁₋ₓ is provided,
whereby M^{I} is selected from the group of divalent alkaline earth metals, europium or mixtures thereof
M^{II} is selected from the group of trivalent rare earth metals, yttrium, lanthanum, scandium or mixtures thereof
and x is > 0 and < 1.

It should be noted that by the term "M^{I}4₋ₓM^{II}xSi₆N₁₀+ₓO₁₋ₓ" especially and/or additionally any material is meant and/or included, which has essentially this composition.

The term "essentially" means especially that ≥ 95 %, preferably ≥ 97 % and most preferred ≥ 99 % wt-%. However, in some applications, trace amounts of additives may also be present in the bulk compositions. These additives particularly include such species known to the art as fluxes. Suitable fluxes include alkaline earth - or alkaline - metal oxides and fluorides, SiO₂ and the like and mixtures thereof.

Such a material has shown for a wide range of applications within the present invention to have at least one of the following advantages:
- Using the material as luminescent material, white emitting LEDs may be built which show improved lighting features, especially thermal stability, and excellent Ra-values which are for a wide range of applications ≥90, for some even ≥94 or ≥96.
- Using the material as a luminescent material, it has been found that for a wide range of applications within the present invention the color temperature of the LED is essentially independent from the used current and the LED temperature
- The material is for a wide range of applications within the present invention robust and shows especially no or only less degradation of luminescence when exposed to higher temperature.

Without being bound to any theory, the inventors believe that the improved properties of the inventive material arise at least partially out of the structure of the material.

It is believed that the inventive material essentially has a cubic structure which comprises all-corner sharing Si(N,O)₄ tetrahedra that create an extended three-dimensional network with two crystallographically different Si sites.

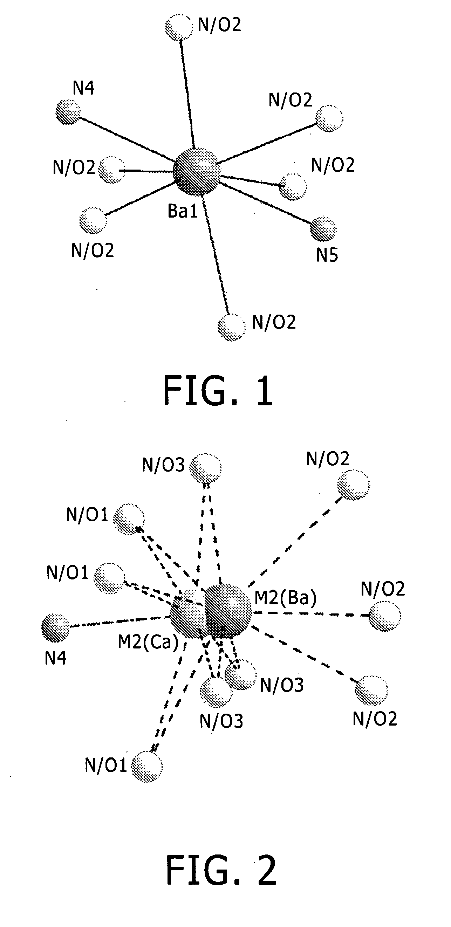

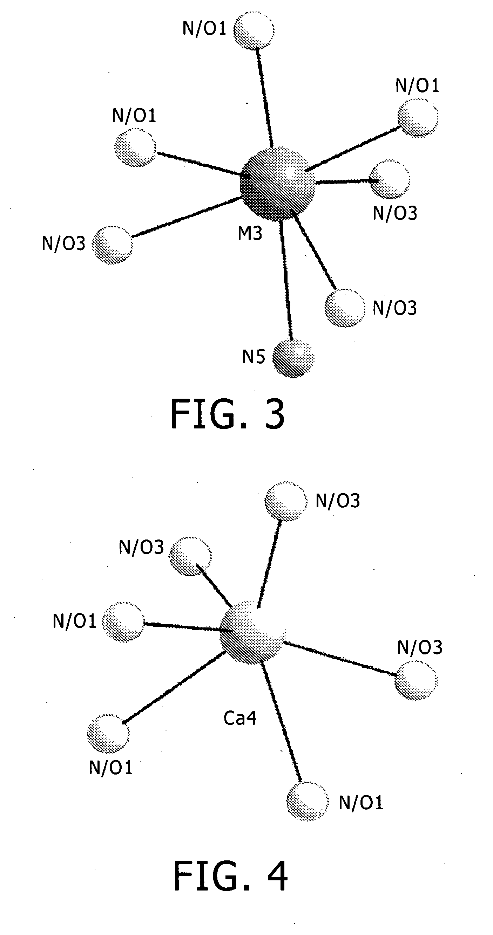

For a wide range of structures within the inventive material in the unit cell there exist four different metal positions (M1, M2, M3, and M4) that may be populated with cations of different sizes and valencies (cf. also Figs. 1 to 4 as described later on).

In case that M^{I} comprises Ba and/or Ca, for a wide range of structures within the inventive material the M1 site is occupied by only Ba (largest site), M2 and M3 by Ba and Ca, and M4 by only Ca (smallest site).

It is believed that Eu²⁺ can be incorporated on all available lattice sites, while Ce³⁺ or Eu³⁺ are most likely incorporated on M3 site. This can be assumed because in the isotypic compound Ba_{1.5}Eu_{1.5}YbSi₆N₁₁ the trivalent cation Yb³⁺ is built in only on M3 sites.

All in all, for a wide range of structures within the inventive material the structure results in a so-called 4-6-11 phase. The distribution of cations (if present) which is usually found for a wide range of structures within the inventive material is listed in Table I:

**Table I: Distribution of cations over available sites in the 4-6-11. structure:**

| Site/occupancy | Ba(II) | Ca(II) | Sr(II) | Eu(II) | Ce(III) | RE(III) |
|---|---|---|---|---|---|---|
| M1 | x | - | (x) | (x) | - | - |
| M2 | (x) | (x) | (x) | (x) | - | - |
| M3 | (x) | (x) | (x) | (x) | x | x |
| M4 | - | x | (x) | (x) | (x) | (x) |

| | | | | | | |
|---|---|---|---|---|---|---|
| (x full occupation, (x) partial occupation, - no occupation.) | | | | | | |

According to a preferred embodiment of the present invention, the material has essentially a cubic crystal structure

This has been shown to lead to a material with further improved lighting features for a wide range of application within the present invention.

According to a preferred embodiment of the present invention, the material comprises Europium and Cerium. This has been shown to be advantageous for a wide range of applications within the present invention and eases the build-up of a white light emitting material.

According to a preferred embodiment of the present invention, the relation (in mole:mole) of Europium and Cerium is ≥1:0.5 and ≤1:10, preferably ≥1:1 and ≤1:3, more preferred ≥1:1.5 and ≤1:3. This has been shown to be advantageous for a wide range of applications within the present invention.

Without being bound to any theory, the inventors believe that the incorporation of Ce (III) at least partially reduced any Eu (III) which may arise out of the Eu(II) present in the material. Since the spectral features of Eu(III) and Eu(II) are greatly different, the optical parameters of the material are furthermore increased.

According to a preferred embodiment of the present invention, x is ≥0.25 and ≤0. 75, preferably ≥0.4 and ≤0.6. This has been found to be advantageous for a wide range of structures within the present invention.

According to a preferred embodiment of the present invention, the cubic lattice constant a₀ is ≥1.02 and ≤1.06 nm. Structures with this lattice constant have been shown to match the needs especially for white emitting materials within a wide range of structures within the present invention.

The present invention furthermore relates to the use of the inventive material as a luminescent material.

The present invention furthermore relates to a light emitting material, especially a LED, comprising at least one material as described above.

Preferably the at least one material is provided as powder and/or as ceramic material.

If the at least one material is provided at least partially as a powder, it is especially preferred that the powder has a d₅₀ of ≥ 5 µm and ≤ 15 µm. This has been shown to be advantageous for a wide range of applications within the present invention.

If the at least one material is provided at least partially as a powder, it is especially preferred that the concentration (in mole) of Ce is ≥0.5 % and ≤ 4 %, preferably ≥1 % and ≤3 % (of the M^{I}-atoms). This has been found to be advantageous for a wide range of materials within the present invention.

According to a preferred embodiment of the present invention, the at least one material is at least partly provided as at least one ceramic material.

The term "ceramic material" in the sense of the present invention means and/or includes especially a crystalline or polycrystalline compact material or composite material with a controlled amount of pores or which is pore free.

The term "polycrystalline material" in the sense of the present invention means and/or includes especially a material with a volume density larger than 90 percent of the main constituent, consisting of more than 80 percent of single crystal domains, with each domain being larger than 0.5 µm in diameter and having different crystallographic orientations. The single crystal domains may be connected by amorphous or glassy material or by additional crystalline constituents.

According to a preferred embodiment, the at least one ceramic material has a density of ≥90% and ≤ 100% of the theoretical density. This has been shown to be advantageous for a wide range of applications within the present invention since then the luminescent properties of the at least one ceramic material may be increased.

More preferably the at least one ceramic material has a density of ≥97% and ≤ 100% of the theoretical density, yet more preferred ≥98% and ≤100%, even more preferred ≥98.5% and ≤ 100% and most preferred ≥99.0% and ≤100%.

If the at least one material is provided at least partially as a ceramic, it is especially preferred that the concentration (in mole) of Ce is ≥0.05% and ≤2 %, preferably ≥0.2% and ≤1.5%, more preferred ≥0.5% and ≤1% (of the M^{I}-atoms). This has been found to be advantageous for a wide range of materials within the present invention.

According to a preferred embodiment of the present invention, the surface roughness RMS (disruption of the planarity of a surface; measured as the geometric mean of the difference between highest and deepest surface features) of the surface(s) of the at least one ceramic material is ≥0.001 µm and ≤5 µm.

According to an embodiment of the present invention, the surface roughness of the surface(s) of the at least one ceramic material is ≥0.005 µm and ≤0.8 µm, according to an embodiment of the present invention ≥0.01 µm and ≤0.5 µm, according to an embodiment of the present invention ≥0.02 µm and ≤0.2 µm, and according to an embodiment of the present invention ≥0.03 µm and ≤0.15 µm.

According to a preferred embodiment of the present invention, the specific surface area of the at least one ceramic material is ≥10⁻⁷ m²/g and ≤ 0.1 m²/g.

A material and/or a light emitting device according to the present invention may be of use in a broad variety of systems and/or applications, amongst them one or more of the following:
- Office lighting systems
- household application systems
- shop lighting systems,
- home lighting systems,
- accent lighting systems,
- spot lighting systems,
- theatre lighting systems,
- fibre-optics application systems,
- projection systems,
- self-lit display systems,
- pixelated display systems,
- segmented display systems,
- warning sign systems,
- medical lighting application systems,
- indicator sign systems, and
- decorative lighting systems
- portable systems
- automotive applications
- green house lighting systems

The aforementioned components, as well as the claimed components and the components to be used in accordance with the invention in the described embodiments, are not subject to any special exceptions with respect to their size, shape, material selection and technical concept such that the selection criteria known in the pertinent field can be applied without limitations.

### BRIEF DESCRIPTION OF THE DRAWINGS

Additional details, features, characteristics and advantages of the object of the invention are disclosed in the subclaims, the figures and the following description of the respective figures and examples, which --in an exemplary fashion-- show several embodiments and examples of a at least one ceramic material for use in a light emitting device according to the invention as well as several embodiments and examples of a light emitting device according to the invention.
Fig. 1 is a schematical view of the M(1)-site in the believed structure of the inventive material
Fig. 2 is a schematical view of the M(1)-site in the believed structure of the inventive material
Fig. 3 is a schematical view of the M(1)-site in the believed structure of the inventive material
Fig.4 is a schematical view of the M(1)-site in the believed structure of the inventive material
Fig. 5 is an emission spectrum (370 nm excitation) of a material according to a first example of the present invention
Fig. 6 is an excitation and emission spectrum of a material according to a second example of the present invention;
Fig. 7 is two emission spectra (370 nm excitation) of two materials according to a third and fourth example of the present invention;
Fig. 8 is an emission spectrum (370 nm excitation) of a material according to a fifth example of the present invention; and
Fig. 9 is a diagram showing the relation between the lattice constant and the Ba content for various materials according to the present invention.

Figs. 1 to 4 are schematical views of the M(1) to M(4)-site in the believed structure of the inventive material. These views are merely to be understood as illustrative and averadged and may vary for different actual compositions within the present invention.

As can be seen in Fig. 1, the M(1) site is believed to be occupied by Ba only, if present in the structure. The M(2) site may be occupied by all different earth alkali metals, however, it is believed that the actual position differs a bit depending on the size e.g. that the "Ca"-place and "Ba"-place are slightly shifted.

The M(3) site may be occupied by a variety of atoms whereas the M(4) site is occupeid by Ca only, if present in the structure.

The invention will be further understood by the following Examples I to V which - in a merely illustrative fashion - shows several materials of the present invention

### EXAMPLE I:

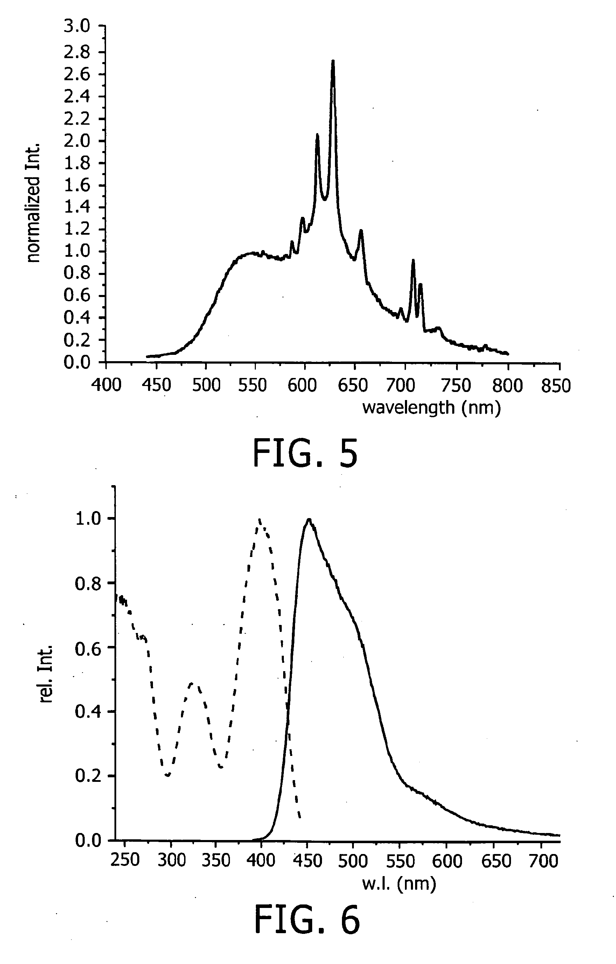

Fig. 5 refers to (Ba_{1.8}Ca_{2.2})Si₆N₁₀O:Eu(1%) (EXAMPLE I) and shows its emission spectrum (370 nm excitation).

This material is doped with Eu only.

### EXAMPLE II:

Fig. 6 refers to (Ba_{1.8}Ca_{2.2})Si₆N₁₀O:Ce(1%) (EXAMPLE II) and shows its excitation (dotted line) and emission spectrum.

The material of this Example shows a strong absorption band at 390 nm which makes the material suitable for excitation with AlInGaN UV-A LEDs emitting in the 370 - 400 nm spectral region. The emission of Ce(III) that occupies M(3) position in the lattice is in the blue spectral region with a shoulder in the green spectral region that might be explained by some Ce(III) also built in on M(4) site. Due to the very small Stokes shift, the Ce(III) doped 4-6-11 phase can be efficiently excited in the 370 - 400 nm spectral region.

### EXAMPLE III and IV:

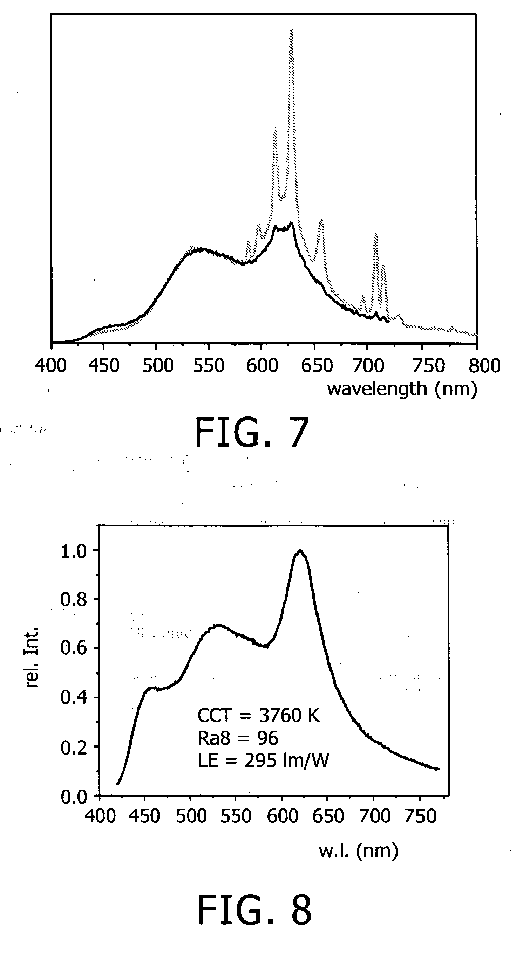

Fig. 7 refers to of (Ba_{1.8}Ca_{2.2})Si₆N₁₀O:Eu(1%),Ce with 1% Ce (EXAMPLE III) and 2% Ce (EXAMPLE IV), showing the emission spectra (Example III: lower curve, Example IV: upper curve).

It can be seen that a higher Ce(III) content suppresses the Eu(III) emission lines in the red spectral region which leads to an enhancement of the overall efficiency and is therefore a preferred embodiment of the present invention as described above.

### EXAMPLE V:

Fig. 8 refers to Ba_{1.746}Ca_{2.134}Si₆N_{10.08}O_{0.92}:Eu_{0.04}Ce_{0.08} (EXAMPLE V) and shows its emission spectrum (390 nm excitation).

The emitted phosphor light shows a correlated color temperature of 3760 K and a color rendering index of 96, leading to a warm white emission (x = 0.398, y = 0.402)

To further illustrate the invention, the preparation of the material of Example IV is described in the following:

The starting materials for the synthesis of (Ba_{1.8}Ca_{2.2})Si₆N₁₀O:Eu(1%)Ce(2%) and the temperature program is listed in Table **II**: Table II:

| **Starting materials** | | **Temperature program** |
|---|---|---|
| Ba: | 0.59 mol = 81.5 g | 25°C → 1450 °C (3 h) |
| Ca: | 0.73 mol = 29.1 g | 1450°C → 1450 °C (10 h) |
| EuF₃ : | 0.013 mol = 2.8 g | 1450°C → 800 °C (35 h) |
| CeF₃: | 0.026 mol = 5.2 g | 800°C → 25°C (1h) |
| SiO₂(Aerosil A380): | 0.17 mol = 10.0 g | |
| Si(NH)₂: | 1.54 mol = 91.0 g | |

Ba and Ca metal powders were mixed under argon atmosphere with EuF₃ and CeF₃ by grinding. Then SiO₂ and Si(NH)₂ are added and the batch formed by the precursor materials is intimately mixed. After mixing, the precursor batch is transferred into molybdenum crucibles and is then fired in a N₂ or H₂/N₂ (5/95) atmosphere with the temperature program given in table 1. After firing, the luminescent powder material is milled and washed with water. After drying, the phosphor powder is screened to obtain a powder with the desired particle size distribution.

The materials of the further Examples were made in analogy to this procedure.

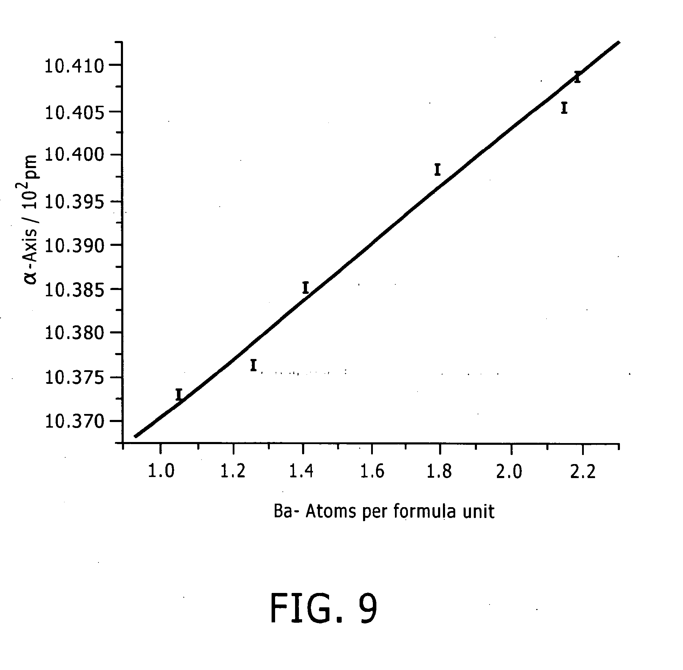

Fig. 9 is a diagram showing the relation between the lattice constant and the Ba content for various materials according to the present invention. In this diagram, the lattice constants for various materials of the net formula Ba₄₋ₓCaₓSi₆N₁₀O (with Ba from 1.0 to 2.2 as shown in the diagram) were measured.

In accordance with Veegart's law, incorporation of larger host cations (Ba) leads to an enlargement of the unit cell while incorporation of smaller host cations (Ca) leads to a contraction of the unit cell.

Surprisingly it could be found that in the first case, the broad band emission of the Ce(III) and Eu(II) doped materials are slightly shifted towards the blue while in the latter case, the emission is slightly shifted towards the red. As a consequence, the correlated color temperature of the phosphor emission of a material with the net formula (Ba₁₋ₓCaₓ)_{a-y-z}Si₆N_{10+z}O_{1-z}:Eu_{y}Ce_{z} can be tuned by changing the Ba/Ca ratio.

## Claims

1. M^{I}₄₋ₓM^{II}ₓSi₆N₁₀₊ₓO₁₋ₓ
whereby M^{I} is selected from the group of divalent alkaline earth metals, europium or mixtures thereof
M^{II} is selected from the group of trivalent rare earth metals, yttrium, lanthanum, scandium or mixtures thereof
and x is > 0 and < 1.

2. The material of Claim 1 , whereby the material comprises Europium and Cerium.

3. The material of any of the Claims 1 or 2, whereby the content (in mol:mol) of Europium and Cerium is ≥1:0.5 and ≤1:10

4. The use of a material according to any of the claims 1 to 3 as a luminescent material.

5. Light emitting device, especially a LED comprising at least one material of any of the claims 1 to 3.

6. The light emitting device of claim 5 whereby the at least one material of the structure M^{I}₄₋ₓM^{II}Si₆N₁₀₊ₓO₁₋ₓ is provided as powder and/or as ceramic material

7. The light emitting device of any of the claims 5 to 6 furthermore comprising at least one UVA light emitting material and/or at least one UVA light emitting source

8. The light emitting device of claim 6, whereby the ceramic has ≥90% of the theoretical density

9. A system comprising a material according to any of the claims 1 to 3, the system being used in one or more of the following applications:
- Office lighting systems
- household application systems
- shop lighting systems,
- home lighting systems,
- accent lighting systems,
- spot lighting systems,
- theater lighting systems,
- fiber-optics application systems,
- projection systems,
- self-lit display systems,
- pixelated display systems,
- segmented display systems,
- warning sign systems,
- medical lighting application systems,
- indicator sign systems, and
- decorative lighting systems
- portable systems
- automotive applications
- green house lighting systems

## Patentansprüche

1. M^{I}₄₋ₓM^{II}ₓSi₆N₁₀₊ₓO₁₋ₓ
wobei M¹ aus der Gruppe, bestehend aus bivalenten Erdalkalimetallen, Europium oder Mischungen aus diesen, ausgewählt wird,
M^{II} aus der Gruppe, bestehend aus trivalenten Seltenerdmetallen, Yttrium, Lanthan, Scandium oder Mischungen aus diesen, ausgewählt wird,
und x > 0 und < 1 ist.

2. Material nach Anspruch 1, wobei das Material Europium und Cer umfasst.

3. Material nach Anspruch 1 oder 2, wobei der Gehalt (in Mol:Mol) an Europium und Cer ≥ 1:0,5 und ≤ 1:10 ist.

4. Verwendung eines Materials nach einem der Ansprüche 1 bis 3 als lumineszierendes Material.

5. Licht emittierende Einrichtung, insbesondere eine LED, mit mindestens einem Material nach einem der Ansprüche 1 bis 3.

6. Licht emittierende Einrichtung nach Anspruch 5, wobei das mindestens eine Material der Struktur M¹₄₋ₓM^{II}ₓSi₆N₁₀₊ₓO₁₋ₓ als Pulver und/oder als keramisches Material vorgesehen ist.

7. Licht emittierende Einrichtung nach einem der Ansprüche 5 bis 6, welche weiterhin mindestens ein UVA-Licht emittierendes Material und/oder mindestens eine UVA-Licht emittierende Lichtquelle umfasst.

8. Licht emittierende Einrichtung nach Anspruch 6, wobei das keramische Material ≥ 90% der theoretischen Dichte aufweist.

9. System, welches ein Material nach einem der Ansprüche 1 bis 3 umfasst, wobei das System für eine oder mehrere der folgenden Einsatzmöglichkeiten verwendet wird:
- Bürobeleuchtungssysteme
- Systeme zum Einsatz im Haushalt
- Ladenbeleuchtungssysteme
- Beleuchtungssysteme für den Wohnbereich
- Akzentbeleuchtungssysteme
- Spot-Beleuchtungssysteme
- Theaterbeleuchtungssysteme
- Lichtleitersysteme
- Projektionssysteme
- selbstleuchtende Display-Systeme
- pixelierte Display-Systeme
- segmentierte Display-Systeme
- Warnzeichensysteme
- Beleuchtungssysteme zur medizinischen Anwendung
- Hinweissysteme sowie
- Systeme für dekorative Beleuchtung
- portable Systeme
- zur Verwendung in Kraftfahrzeugen
- Gewächshaus-Beleuchtungssysteme

## Revendications

1. M^{I}₄₋ₓM^{II}ₓSi₆N₁₀₊ₓO₁₋ₓ
où M^{I} est sélectionné parmi le groupe constitué de métaux alcalino-terreux divalents, d'europium ou de mélanges de ceux-ci ;
où M^{II} est sélectionné parmi le groupe constitué de métaux de terre rare trivalents, d'yttrium, de lanthane, de scandium ou de mélanges de ceux-ci ;
et x > 0 et < 1.

2. Matériau selon la revendication 1, suivant lequel le matériau comprend de l'europium et du cérium.

3. Matériau selon l'une quelconque des revendications précédentes 1 ou 2, suivant lequel la teneur (en moles : moles) d'europium et de cérium est ≥ 1 : 0,5 est ≤ 1 : 10.

4. Utilisation d'un matériau selon l'une quelconque des revendications précédentes 1 à 3 en tant qu'un matériau luminescent.

5. Dispositif électroluminescent, notamment une DEL comprenant au moins un matériau selon l'une quelconque des revendications précédentes 1 à 3.

6. Dispositif électroluminescent selon la revendication 5, suivant lequel l'au moins un matériau de la structure M^{I}₄₋ₓM^{II}xSi₆N₁₀₊ₓO₁₋ₓ est fourni en tant qu'une poudre et/ou en tant qu'un matériau céramique.

7. Dispositif électroluminescent selon l'une quelconque des revendications précédentes 5 à 6, comprenant en outre au moins un matériau émettant de la lumière UVA et/ou au moins une source émettrice de lumière UVA.

8. Dispositif électroluminescent selon la revendication 6, suivant lequel la céramique présente une valeur ≥ 90% de la densité théorique.

9. Système comprenant un matériau selon l'une quelconque des revendications précédentes 1 à 3, le système étant utilisé dans une ou plusieurs des applications suivantes :
- des systèmes d'éclairage de bureaux,
- des systèmes d'applications ménagères,
- des systèmes d'éclairage de magasins,
- des systèmes d'éclairage de maisons,
- des systèmes d'éclairage d'accent,
- des systèmes d'éclairage spot,
- des systèmes d'éclairage de théâtres,
- des systèmes d'application d'optiques fibreuses,
- des systèmes de projection,
- des systèmes d'affichage automatique,
- des systèmes d'affichage pixélisé,
- des systèmes d'affichage segmenté,
- des systèmes de signes d'avertissement,
- des systèmes d'applications d'éclairage médicales,
- des systèmes de signes indicateurs, et
- des systèmes d'éclairage décoratif,
- des systèmes portatifs,
- des systèmes de véhicules à moteur,
- des systèmes d'éclairage de serres.
